# EUROPEAN PATENT APPLICATION

(11) **EP 1 170 972 A1**
(43) Date of publication of application: **09.01.2002**
(21) Application number: 00401921.2
(22) Date of filing: 05.07.2000
(51) Int. Cl.: H04Q 7/38

(54) **Method to set up a voice over internet protocol communication**

(71) Applicant: ALCATEL, 75008 Paris (FR)
(72) Inventor: Poppe, Fabrice, 9000 Gent (BE); De Vleeschauer, Danny, 9940 Evergem (BE); Petit, Guido Henri Marguerite, 2018 Antwerp (BE)
(74) Representative: Narmon, Gisèle Marie Thérèse

(57) **Abstract**

The invention concerns a method to set up a voice over Internet Protocol communication between a mobile terminal (MT) and a second device (T2) whereby the voice over Internet Protocol communication comprises an air interface between the mobile terminal (MT) and a base station (BS) which is coupled via an access network and an Internet Protocol network to the second device (T2). The method comprises a step of determining, according to predefined rules and conditions, during call setup appropriate values for a plurality of parameters which are characterizing the voice over Internet Protocol communication in order to realize a desired trade-off between a predefined user quality of said voice over Internet Protocol communication and a predefined bandwidth efficiency.

## Description

The present invention relates to a method to set up a voice over Internet Protocol communication as described in the preamble of claim 1, to a device for use in a telecommunication network that uses said method as described in the preamble of claim 12 and to a telecommunication network that comprises such a device as described in the preamble of claim 15.

Such a method and device are already known in the art. Indeed, Internet Protocol network architectures are gradually becoming a reality. An illustration of this is the increasing interest in Internet Telephony, called hereafter a voice over Internet Protocol communication or shortly a VolP communication. Such a VolP technology allows the integration of the voice networks and the data transport networks. The potential benefit for corporate and home users includes the reduced cost of only needing one single connection to the outside world as well as lower per minute telephony rate. For operators it has the benefit of having to manage only one network for both voice and data traffic. This is also valid for wireless operators.

In this way, a voice over Internet Protocol communication that comprises an air interface is set up between a mobile terminal and a second device. The air interface is located between the mobile terminal and a base station. The base station is coupled via an access network, commonly called a terrestrial radio access network, and via an Internet Protocol backbone network to this second device. The second device is e.g. a mobile terminal in a mobile network, a fixed terminal in a PSTN network or an Internet Protocol terminal directly coupled to the IP backbone network.

Both, the mobile terminal and the second device are enabled to encapsulate voice into Internet Protocol packets.

However, guaranteeing the quality of such voice calls transported in a data flow of Real Time Protocol RTP, User Datagram Protocol UDP and Internet Protocol packets that crosses an air interface requires appropriate values for the parameters which are characterizing the voice over Internet Protocol communication. These parameters are e.g. the parameters of the air interface such as a power budget, an air interface channel code and an interleaving scheme; and parameters of the VolP application such as de-jittering delay and voice payload size. According to prior art solutions, after a differentiation between the type of application i.e. no real time data application or streaming media application, some predefined default values are used to set up such a 'VolP comprising an air interface' - communication. The default values are determined once at e.g. engineering time or installation time of the communication system and are usually based on some worst case assumptions. The pre-determined values are pre-established in the respective devices in order to be used to set up the different VolP communications. In this way, the same values are predetermined and used irrespective of the scenario i.e. irrespective of the kind of transport stages the voice packet flow goes through. Indeed, the quality of a call can strongly depend on the actual scenario, which will become clear in the following paragraph by means of a few examples.

Due to the predefined default values based upon worst-case assumptions, a UMTS subscriber calling a PSTN subscriber will experience a quality that is better than a UMTS subscriber calling another UMTS subscriber, even when it is technically feasible - by another parameter setting - to offer him the same quality.

Bandwidth is wasted in the event when the number of voice code words that could be packed into a single IP packet without exceeding the mouth-to-ear delay budget is larger than the default number of voice code words. Indeed, it has to be understood that a predefined number of voice code words that is encapsulated in one IP packets provides a predefined voice payload size of the IP packets. This voice payload size provides in its turn a predefined value for bandwidth efficiency and a predefined value for mouth-to-ear delay. The mouth-to-ear delay reflects in fact a subjective quality for a subscriber. The pre-defined number of voice code words doesn't always generate a good trade-off between bandwidth efficiency and subjective voice quality.

In the event of an UMTS air interface, which will be explained in a later paragraph, a predefined choice of interleaving scheme with a rather short interleaving span, also called transmission time interval, requires a better signal to noise ratio, which is a trade-off between both parameters that not for each scenario is the most appropriate one.

An object of the present invention is to provide a method and associated device to set up a voice over Internet Protocol communication that comprises an air interface, such as the above known method but whereof a desired trade-off between a predefined user quality of the voice over Internet Protocol communication and a predefined bandwidth efficiency is realized for each kind of scenario.

According to the invention, this object is achieved by the method of claim 1 that is realized by the device of claim 12, which is comprised in a telecommunication system according to claim 16.

Indeed, by determining with the device according to the present invention, appropriate values for the parameters that are characterizing the voice over Internet Protocol communication, according to predefined rules and conditions, during call set-up, a desired trade-off between a user quality and a bandwidth efficiency is reached for each VolP call, irrespective of the used scenario. Instead of resorting to default values, the characterizing parameters are engineered for each VolP communication during call set-up.

It has to be remarked that the particular parameters are determined during call set-up. This means that this step of determining values for the parameters is part of the total call set up procedure. Indeed, the values might be determined just before the known functions to set up a call are going to be executed, but might be as well still in determination phase during the execution of these known functions. As long as the appropriate value for a particular parameter is determined and is available at the moment when the parameter is required to establish the actual call set-up.

A preferred embodiment is described in claim 5. Indeed, it has to be mentioned that a possible air interface can be implemented by the air interface of a Global System for Mobile Telecommunications system - GSM system or by the air interface of an Enhanced Data rate for GSM Evolution system - EDGE system. However, in parallel with the development of the Internet Telephony, the standardization of third-generation mobile communication systems is rapidly progressing. Universal Mobile Telecommunication Systems - UMTS - which are standardized by 3GPP enhances the services provided by the current second-generation systems such as Global system for Mobile communication - GSM - with high-rate data services. These larger bit rates enable wireless operators to offer much more services to their customer, such as web browsing and e-mail. This is an incentive for studying whether voice can be carried over the UMTS air interface in Internet Protocol packets in order to obtain a single solution for data and voice services. An advantage of the UMTS air interface regarding the present invention is the actual offered possibility to define the communication parameters for data traffic different from the communication parameters for voice traffic.

Such an above described VolP communication that comprises an air interface could be characterized by:
- the voice payload size of the IP packets to be transmitted between the mobile terminal and the second device during the VolP communication;
- the de-jittering delay introduced by a de-jittering buffer which is coupled between the base station and the second device;
- the air interface parameters such as:
   - the power budget to be used by the mobile terminal towards the base station or by the base station, towards the mobile terminal;
   - the air interface channel code used by the base station and the mobile terminal;
   - the interleaving scheme used by the mobile terminal and the base station.

These parameters are described in claim 3 and are explained in more detail in the following paragraph taking the above-mentioned UMTS air interface as an example.

The physical layer of the air interface has the difficult task of making the unreliable character of the wireless channel imperceptible for applications that tolerate only small packet losses i.e. VolP communications.

A first parameter of the physical layer of the air interface is the used channel code to channel code the bit stream of a voice application. A channel code can be chosen among a number of alternatives that are using different algorithms and that have different coding rates. According to the applied coding rate different performance and bandwidth consumption is introduced. The choice might depend on the sensitivity of the application to packet loss.

The service an application receives also depends on the interleaving scheme. The physical layer applies a two-stage i.e. inter-frame and intra-frame bit-level interleaving to mitigate the effect of transitory bad channel conditions. Inter-frame interleaving happens on the scale of an interleaving span, also called transmission time interval TTI. The transmission time interval has a fixed duration for each transport channel and is equal to 1, 2, 4 or 8 radio frames (10-80 ms). During each transmission time interval, the blocks, which are handed over by the Medium Access Layer MAC layer during the previous transmission time interval, are transmitted. The choice of the transmission time interval for an application is a trade-off between packet loss and packet delay. A longer transmission time interval means more delay, but also decreases the probability that an error burst on the physical channel affects the application. Successive bits are spread out over a larger time period, which decreases the impact of transitory bad channel conditions.

How large the transmission time interval can be made depends on the mouth-to-ear delay budget. How small it can be made depends on the power budget i.e. the third parameter, and of the tolerance of the used voice codec towards the loss of voice frames. The higher the compression rate a voice codec introduces, the less the tolerance towards the loss of voice frames.

It has to be explained that the power budget of the mobile terminal is the power budget used to transmit the IP packets in upstream direction and that the power budget of the base station is the power budget used to transmit the IP packets in downstream direction towards the terminal.

This brings us to a general remark concerning all the characteristic parameters of the VolP communication. Indeed, according to the present invention, appropriate values are determined for the characteristic parameters of the VolP communication during set-up. Although the values for these parameters are often identical for the communication in the upstream direction as for the communication in the downstream direction, the present invention is not restricted to a determination of only one set of values for use in the upstream and in the downstream direction. Indeed, the aim of the present invention is that the appropriate values for the characteristic parameters are determined in order to realize a desired trade-off for the VolP communication in as well the upstream direction as the downstream direction. Hereby it might be necessary to determine a value for a certain parameter in the downstream direction and another value for this parameter in the downstream direction in order to reach this trade off for the VolP communication.

Another characteristic feature of the present invention is that the determined values during call set-up also must be used to complete this call set-up whereby the method further comprises a step of signaling at least part of the appropriate values to the mobile terminal, to the second device, to the de-jittering buffer and to the base station in order to be used during the set up of the voice over Internet Protocol communication. This is described in claim 2.

Furthermore, in the event of a changing scenario during the VolP communication, the appropriate values must be adapted in order to remain indeed optimal for the new situation. Such a changing scenario is for instance when a mobile subscriber move towards a congested cell whereby the interference with other users becomes higher. In this way the signal to noise ratio also increases. Hereby it is clear that the physical characteristics of the air interface have changed. A further characteristic feature of the present invention introduces an adaptation of the parameters during the voice over Internet Protocol communication. Indeed, an adaptation of the channel code or of the interleaving scheme could optimize the predefined trade-off again. The adaptation of the parameters during the voice over Internet communication is described in claim 4.

Furthermore it has to be explained that the second device can be implemented by an Internet Protocol gateway or by an Internet Protocol terminal. This is described in claim 6 and claim 7. An Internet Protocol terminal is a terminal that is enabled to encapsulate and to de-capsulate data into and out Internet packets i.e. the Internet Protocol terminal is Internet Protocol - aware. The Internet Protocol gateway is also Internet Protocol - aware and performs the encapsulation and de-capsulation for the finally destined user of the concerned VolP communication. The VolP communication is routed via this Internet Protocol gateway to its destination. This means that in such an event the destination of the VolP communication can be implemented by different kind of terminals e.g. a telephone in a PSTN network which is coupled via this Internet Protocol gateway to the Internet backbone network or another mobile terminal which is coupled via an access network to the Internet Protocol network.

Since it is desired to reach a trade off between a predefined user quality of the voice over Internet Protocol communication and predefined bandwidth efficiency, the trade-off can be defined according to different kind of priorities.

Such a predefined user quality of the communication is e.g. defined in the known E-model with title 'The E-model, a computational model for use in transmission planning' with reference, ITU-T recommendation G.107, May 2000. The E-model predicts the subjective quality that will be experienced by an 'average' listener. The E-model is used to calculate a quality rating for packetised telephony starting from the parameters describing the operation of the transmission stages the voice packets go through. Every rating value corresponds to a speech transmission category e.g. best quality, medium quality or poor quality.

A predefined bandwidth efficiency of a communication is e.g. defined by the number of voice words being packet in a IP packet. Packing as much voice words as possible into the same IP packet provides the largest bandwidth efficiency.

A possible way to define the desired trade-off is taking into account predefined user preferences of a user desiring to set up the voice over Internet Protocol communication. These user preferences might be different from user to user and thereby might be different from communication to communication. A possible way to pre-install these user preferences is by e.g. predefining a limit on the at least expected quality rating according to the known ITU-T E-model. In this way for an identical scenario e.g. from UMTS IP terminal, over an IP backbone network to another UMTS IP terminal the result of the step of determining appropriate values can differ from user to user, depending from its pre-installed user preferences. This is described in claim 8.

Another way to define the desired trade-off is taking into account predefined operator preferences of an operator exploiting the base station. Indeed, different operators might manage its network according to different requirements for bandwidth efficiencies by emphasizing different priorities e.g. smaller bandwidth efficiency for a network with lower power consumption, or a higher bandwidth efficiency for a network with higher power consumption.

Even more, a same operator might have different requirements for different base stations in its network according to the same reasons as above. In this way for an identical scenario but e.g. via another base station the result of the step of determining appropriate values can differ from user to user, depending from the pre-installed operator preferences. This is described in claim 9.

As it is clear from the previous paragraphs, different methodologies are possible to implement the step of determining appropriate values for a plurality of parameters that are characterizing the voice over Internet Protocol communication. However, a preferred methodology is described in claim 10. Indeed, the step of determining the values for the plurality of parameters might comprise:
a) defining a plurality of mouth to ear delay versus distortion planes, each plane being associated to a combination of a value for the power budget and a value for the channel code; and
b) determining in each plane of the plurality of mouth to ear delay versus distortion planes a numerical model comprising constant-rating curves, each one of the constant rating curves reflecting a user quality of the voice over Internet Protocol communication;
c) determining working points, in each mouth to ear delay versus distortion plane, for each combination of a number of voice words and a choice for an interleaving scheme whereby a higher number of voice words reflects a higher bandwidth efficiency, the mouth to ear delay being determined in function of detailed information about the characteristics of the different transport stages a packet of the voice over Internet Protocol communication goes through, the distortion being determined in function of different packet loss probabilities; and providing thereby a total set of working points; and
d) determining according to the desired trade-off an optimal working point out of the total set of working points, the optimal working point being located in a region of one of the mouth to ear delay versus distortion planes, that is bounded by a constant rating curve that reflects the predefined user quality and the optimal working point being associated according to the step c) to a predefined maximum, number of voice words. This methodology will be explained in a further paragraph.

The determination of the constant-rating curves in this preferred methodology according to the ITU-T E-model is described in claim 11.

The device according to the present invention needs to collect detailed information about the characteristics of the different transport stages the voice packet flow goes through, before and after it crosses the air interface, and about the quality of the wireless channel. Therefor, different location in the telecommunication network might be suitable to locate the device according to the present invention e.g. at least partly in the base station, in the mobile terminal itself or in the second device. This is described in claim 13, claim 14 and claim 15.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

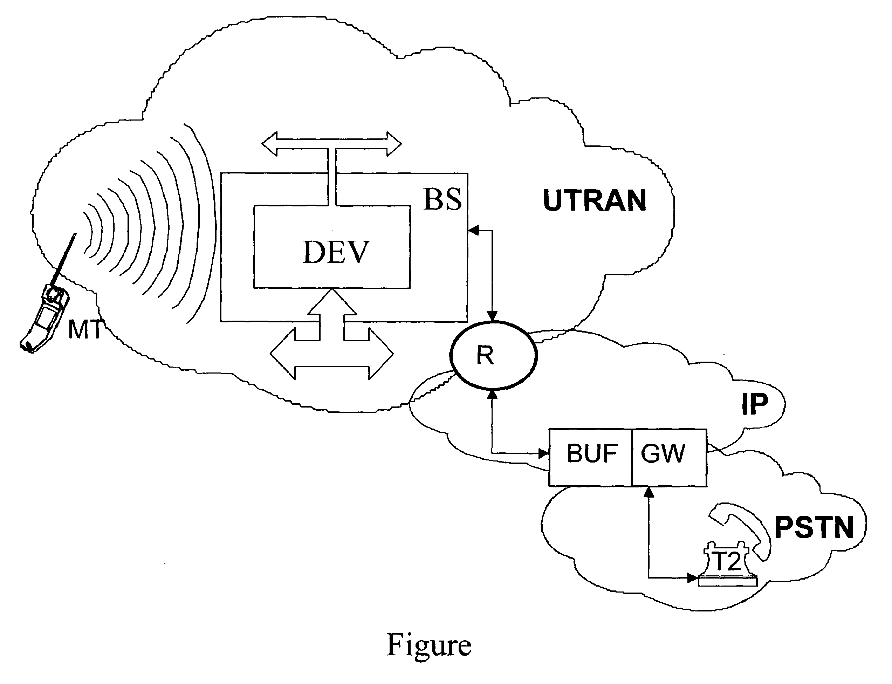

The above and other objects and features of the invention will become more apparent and the invention itself will be best understood by referring to the following description of an embodiment taken in conjunction with the accompanying Figure wherein the different telecommunication stages that a VoIP communication according to the present invention goes through are shown.

The working of the device according to the present invention in accordance with its telecommunication environment that is shown in the Figure will be explained by means of a functional description of the different blocks as shown therein. Based on this description, the practical implementation of the blocks will be obvious to a person skilled in the art and will therefor not be described in details. In addition, the principle working of the method to set up a VolP communication will be described in further detail.

As an example, a VolP communication between an UMTS subscriber and a PSTN subscriber is considered. It is assumed that the PSTN subscriber can reach, via its PSTN terminal T2 and the PSTN network, a VolP gateway GW that is connected to an IP network IP. Between the mobile terminal MT of the UMTS subscriber and the VolP gateway GW, the voice call goes over IP i.e. encapsulated in IP packets, first crossing the UMTS air interface, then the UMTS terrestrial radio access network UTRAN and finally the IP backbone network IP. It is shown in the figure that the UMTS air interface is located between the mobile terminal and a base station BS. The mobile terminal MT accesses the UTRAN over the air interface via the base station BS. The base station BS is coupled in the UTRAN network to an ingress router R that provides access to the IP backbone network. The voice packets are furthermore routed from the ingress router via the IP network towards the gateway GW.

Furthermore, it is preferred, as shown in the Figure, to locate a de-jittering buffer BUF in the gateway GW. This buffer BUF is introduced to eliminate delay jitter in the voice packet flow. The mobile terminal itself, the UMTS air interface and he IP backbone network, all contribute to this delay jitter. Indeed, a queuing of the IP packets just before transmission by the mobile terminal MT introduces jitter. Furthermore, the physical layer of the UMTS air interface introduces also jitter. This will be best understood by referring to the transmission path from the mobile terminal MT to the second device T2. Indeed, in the mobile terminal MT, packets arriving for interleaving, just before the start of a Transmission Time Interval TTI will be served almost immediately, whereas the packets that arrive just after a TTI has started, incur an additional delay of almost one TTI. Finally, the IP packets also incur a queuing delay in the IP network. In order to compensate all this delay-jitter, a delay substantially equal to the sum of the different jitter contributions is introduced in the buffer BUF.

It is preferred for this particular embodiment to comprise the device DEV to set up a VolP communication according to the present invention, in the base station BS since the base station BS is involved in setting up of the VolP communication according to the prior art solutions anyway.

The device DEV is comprised in order to determine, according to predefined rules and conditions, during call set up, appropriate values for a set of parameters. The set of parameters is characterizing the VolP communication in order to realize a desired trade-off between a predefined user quality of the VolP communication and predefined bandwidth efficiency.

For this particular embodiment the characterizing plurality of parameters is defined to be:
Three parameters of the UMTS air interface:
   1. the power budget to be used by the mobile terminal MT and by the base station BS; and
   2. the channel code to be used between the mobile terminal MT and the base station (BS) and;
   3. the interleaving scheme to be used between the mobile terminal MT and the base station (BS); and
furthermore two VolP application parameters :
   4. the de-jittering delay to be introduced by the de-jittering buffer BUF; and
   5. the payload size of the Internet Protocol packets to be transmitted between the mobile terminal MT and the second device T2 during the voice over Internet Protocol communication.

The device, according to the present invention, will determine during call set-up appropriate values for these five parameters in order to reach the predetermined trade-off for the VolP communication.

The device DEV determines these values according to predetermined rules and conditions. In order to execute these predetermined rules and conditions, the device DEV needs some information from the telecommunication network i.e. from the UTRAN as well as from the IP network concerning the communication to be set-up. This is shown in the Figure with the triple arrow below the device DEV. This arrow shows that due to an interaction of questions and answers from the device DEV with its environment, the device is enabled to collect the required information from the telecommunication network.

The information that the device collects from the network is e.g. the supported different interleaving schemes by the mobile terminal MT and the base station BS, the available power budget range at the mobile terminal MT and at the base station BS, detailed delay information about the different transport stages the VolP packets are going through or the supported different channel code types being installed at the mobile terminal and at the base station BS.

Furthermore the device has some pre-knowledge stored in a memory in order to execute these predefined rules and conditions. This will become clear in a further paragraph.

In a memory of the device DEV (not shown) a numerical model is stored. This numerical model defines a number of mouth-to-ear delays versus distortion planes. Each plane is associated to a combination of a possible value for the power budget and a possible channel code.

Each plane of the numerical model comprises a definition of numerical constant-rating curves. This rating is determined according to the above-explained ITU-T E-model that predicts the subjective quality experienced by an 'average' listener. Each one of the constants rating curves reflects a user quality of the voice over Internet Protocol communication.

The memory further comprises information concerning the desired trade-off between a predefined user quality and a predefined bandwidth efficiency. It has to be explained that this information can be implemented according to different ways. A possible implementation is that a pre-installed absolute value for a user quality and a pre-installed absolute value for the bandwidth efficiency are stored in the memory of the device DEV. Such an implementation would however not provide the degree of flexibility that is sought by the present invention. Another implementation is that the memory comprises predetermined minimum requirements by means of absolute values for the bandwidth efficiency and for the user quality. In this way, the device DEV according to the present invention searches for an optimal working point between both taking into account both minimum requirements. Furthermore, another implementation might define the bandwidth efficiency and/or the user quality as a complex function of variables. Indeed, such variables that could influence both requirements are e.g. the time of the day of setting up the desired voice call, the actual load of the communication network, or some user preferences of the user of mobile terminal MT and/or of the second device T2. According to such an implementation, the values for the variables might be extracted from the network e.g. for each call set up or at regular time periods.

For this preferred embodiment it is decided to implement predetermined minimum requirements by means of absolute values for the bandwidth efficiency and for the user quality.

In the event when a user of the mobile terminal MT desires to reach a user of the PSTN terminal T2, the required information is collected from the different networks the voice packets will go through. This information is provided to the device DEV. Together with the pre-installed knowledge of the memory in the device DEV and the collected information, the device DEV determines different working points, according to predefined rules and conditions, in each mouth to ear delay versus distortion plane. The different working points are determined for each combination of a number of voice words and a choice of an interleaving scheme. It has to be explained that a higher number of voice words reflects a higher bandwidth efficiency. The mouth to ear delay is determined in function of detailed information about the characteristics of the different transport stages the packets of the voice over Internet Protocol communication will go through. The distortion is determined in function of different packet loss probabilities. In this way, a total set of working points is determined during this procedure.

According to the predetermined minimum requirements for the bandwidth efficiency and for the user quality, the device DEV determines, among the total set of working points, an optimal working point that is associated to the desired trade-off. The optimal working point is located in a region of one of the mouth to ear delay versus distortion planes, which is bounded by a constant rating curve that reflects the predefined user quality and is furthermore associated to a maximum number of voice words that reflects the desired requirement upon the bandwidth efficiency.

The determined values must be signaled to the different network elements. This is shown in the figure with the triple arrow on top of the device DEV. Indeed, the determined value of the voice payload size is signaled by the device DEV to the mobile terminal MT. The calculated values of the UMTS air interface parameters are signaled to the mobile terminal MT and to the base station BS that is serving the mobile terminal MT. The de-jittering delay is signaled to the de-jittering buffer BUF.

Finally, the set-up of the VolP communication is completed by the different network elements taking into account the appropriate values for the five parameters that are characterizing the VolP communication.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method to set up a voice over Internet Protocol communication between a mobile terminal (MT) and a second device (T2), said voice over Internet Protocol communication comprises an air interface between said mobile terminal (MT) and a base station (BS) being coupled via an access network and an Internet Protocol network to said second device (T2), **characterized in that** said method comprises a step of determining, according to predefined rules and conditions, during call set-up appropriate values for a plurality of parameters which are **characterizing** said voice over Internet Protocol communication in order to realize a desired trade-off between a predefined user quality of said voice over Internet Protocol communication and a predefined bandwidth efficiency.

2. The method according to claim 1, **characterized in that** said method further comprises a step of signaling at least part of said appropriate values to anyone of said mobile terminal (MT), said second device (T2), said de-jittering buffer (BUF) and said base station (BS) in order to be used during said set up of said voice over Internet Protocol communication.

3. The method according to claim 1, **characterized in** by comprising in said plurality of parameters any one of
a parameter of said air interface such as
a power budget to be used by any one of said mobile terminal and a said base station,
an air interface channel code to be used between said mobile terminal (MT) and said base station (BS) and;
an interleaving scheme to be used between said mobile terminal (MT) and said base station (BS) ;
a de-jittering delay introduced at a de-jittering buffer (BUF) being coupled between said base station (BS) and said second device (T2); and
a payload size of Internet Protocol packets to be transmitted between said mobile terminal (MT) and said second device (T2) during said voice over Internet Protocol communication.

4. The method according to any previous claim, **characterized in** by adapting said plurality of parameters also during said voice over Internet Protocol communication.

5. The method according to any previous claim, **characterized in that** said air interface is a Universal Mobile Telecommunication System air interface.

6. The method according to any previous claim, **characterized by** implementing said second device (T2) by a voice over Internet Protocol gateway.

7. The method according to any one of claim 1 to claim 5, **characterized by** implementing said second device (T2) by an Internet Protocol terminal.

8. The method according to any previous claim, **characterized in** by defining said trade-off according to predefined user preferences of a user desiring to set up said voice over Internet Protocol communication.

9. The method according to any previous claim, **characterized in** by defining said trade-off according to predefined operator preferences of an operator exploiting said base station (BS).

10. The method according to any previous claim, **characterized in that** said step of determining said values for said plurality of parameters comprises
a) defining a plurality of mouth to ear delay versus distortion planes, each plane being associated to a combination of a value for said power budget and a value for said channel code; and
b) determining in each plane of said plurality of mouth to ear versus distortion planes a numerical model comprising constant-rating curves, each one of said constant rating curves reflecting a user quality of said voice over Internet Protocol communication;
c) determining working points, in each mouth to ear delay versus distortion plane, for each combination of a number of voice words and a choice for an interleaving scheme whereby a higher number of voice words reflects a higher bandwidth efficiency, said mouth to ear delay being determined in function of detailed information about the characteristics of the different transport stages a packet of said voice over Internet Protocol communication goes through, said distortion being determined in function of different packet loss probabilities; and providing thereby a total set of working points; and
d) determining according to said desired trade-off an optimal working point out of said total set of working points, said optimal working point being located in a region of one of said mouth to ear delay versus distortion planes, that is bounded by a constant rating curve that reflects said predefined user quality and said optimal working point being associated according to said step c) to a predefined maximum number of voice words.

11. The method according to claim 10, **characterized in that** said constant-rating curves being determined according to the ITU-T E-model.

12. Device (DEV) for use in a telecommunication network to set up a voice over Internet Protocol communication between a mobile terminal (MT) and a second device (T2), said voice over Internet communication comprises an air interface between said mobile terminal (MT) and a base station (BS) being coupled via an access network and an Internet Protocol network to said second device (T2), **characterized in that** said device comprises determining means (DET) to determine, according to predefined rules and conditions, during call set-up of said voice over Internet Protocol communication appropriate values for a predetermined plurality of parameters being characteristic for said voice over Internet Protocol communication in order to realize a desired trade-off between a predefined user quality of said voice over Internet Protocol communication and a predefined bandwidth efficiency.

13. A device (DEV) according to claim 12, **characterized in that** said device (DEV) is comprised for at least partly in said mobile terminal (MT).

14. A device (DEV) according to claim 12, **characterized in that** said device (DEV) is comprised for at least partly in said base station (BS).

15. A device (DEV) according to claim 12, **characterized in that** said device (DEV) is comprised for at least partly in said second device (T2).

16. A telecommunication network, **characterized in that** said telecommunication network comprises a device according to any one of claim 12 to claim 15.
